(19) Europäisches Patentamt
European Patent Office
Office européen des brevets

(11) **EP 2 575 100 A1**

(12) **EUROPEAN PATENT APPLICATION**

(43) Date of publication:
**03.04.2013 Bulletin 2013/14**

(51) Int Cl.:
***G06Q 30/02*** (2012.01)

(21) Application number: **12186264.3**

(22) Date of filing: **27.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.09.2011 US 201113246475**

(71) Applicant: **Max-Planck-Gesellschaft zur
Förderung
der Wissenschaften e.V.
80539 München (DE)**

(72) Inventors:
• **Francis, Paul
67663 Kaiserslautern (DE)**
• **Reznichenko, Alexey
67663 Kaiserslautern (DE)**

(74) Representative: **Bach, Alexander et al
Mitscherlich & Partner
Patent- und Rechtsanwälte
Sonnenstraße 33
80331 München (DE)**

(54) **Conducting auctions in private online advertising systems**

(57)  An auction module and one or more private bidding modules operate within a client system to select information items for presentation to users. Upon receiving content with space or opportunities for presenting information items to users, the auction module initiates an auction between the private bidding modules. Each private bidding module may use a user profile, information item attributes, and content attributes to select one or more previously stored information items for possible presentation to the user. The private bidding modules submit bids to the auction module for the selected information items. The auction module determines a winning bid and may provide the corresponding information item for presentation within the content. Users' privacy is protected because the auction module and private bidding modules operate autonomously in the client system in conducting auctions, selecting information items for possible presentation, and submitting bids, so that outside entities never access private user information.

FIG. 1B

**Description**

Cross-Reference to Related Applications

This application is related to U.S. Pat. Appl. No. 12/552,549, filed September 2, 2009, and entitled "PRIVATE, ACCOUNTABLE, AND PERSONALIZED INFORMATION DELIVERY IN A NETWORKED SYSTEM"; U.S. Pat. Appl. No. 12/757,986, filed April 10, 2010, and entitled "PRESERVING USER PRIVACY IN RESPONSE TO USER INTERACTIONS"; and U.S. Pat. Appl. No. 13/246,431, filed September 27, 2011, [Attorney Docket No. MPG000410US], and entitled "PROFILING USERS IN A PRIVATE ONLINE SYSTEM," and U.S. Pat. Appl. No. 13/246,517, filed September 27, 2011, [Attorney Docket No. MPG000520US], and entitled "AUCTION MODULES IN PRIVATE ONLINE ADVERTISING SYSTEMS," all of which are incorporated by reference herein for all purposes.

Field of the Invention

This invention relates generally to the field of information delivery on computer networks, and more particularly to systems and methods for efficiently providing individually targeted advertisements to users while protecting the users' privacy.

Background of the Invention

A major goal of advertising systems, Internet advertising included, is to accurately target the advertisement to the user. Unlike broadcast media such as television and radio, which targets advertisements to groups of users, Internet advertisements can be targeted to individual users. This is good for the advertiser because less money is wasted presenting advertisements to users who don't care about them, and it is good for users because they are not bothered by advertisements that don't interest them.

However, individualized user targeting can also lead to loss of privacy. For example, information about which advertisements are shown to a specific user and which advertisements the user has interacted with (for example clicked on) is often gathered so that the advertiser can monitor the effectiveness of their advertisements and pay for having the advertisement delivered. This information also leads to a loss of user privacy, as personal information about the user may be revealed or inferred from the user interaction. In current non-private online advertising systems, advertising networks or other data aggregators, referred to as brokers, build user profiles by gathering information about user behavior.

Content providers, referred to as publishers, provide content such as webpages and other media to users. This content includes spaces or opportunities for presenting advertisements and other information items to users. These spaces or opportunities for including information items in content are referred to as placements. Publishers typically utilize brokers to select appropriate information items for presentation within their content. In one approach, information item providers, such as advertisers, participate in auctions conducted by the broker for placements within content. In prior auction systems, information item providers access a user's private information from the user profile to select information items relevant to the user. Information item providers also use the user's private information, along with information about the content, to determine their bid prices for available placements. In some applications, brokers conduct auctions for placements for each individual user and/or viewing instance. This enables the placements to be customized for individual user interests and preferences. Information item providers and brokers may use automated or semi-automated agents to conduct auctions and submit bids.

Auction systems for placement of information items in content provides numerous benefits to publishers, information item providers, and users. Information item providers gain detailed knowledge about users and can use this to target advertisements and other communications at specific users. The auction process allows information item providers to efficiently compete for placement opportunities. Because the information items presented in content may be selected for individual user interests and preferences, publishers are able to charge higher prices for their placements. Users also benefit by having higher quality content available for free or at a lower price due to publishers' increased placement revenue.

However, all previous auction systems compromise the users' privacy by gathering user profile information and making this information available to information item providers and brokers.

Summary of the Invention

An embodiment of the invention includes an auction module and one or more private bidding modules operating within a client system. Upon receiving content with space or opportunities for presenting information items to users, the auction module initiates an auction between all or a portion of the private bidding modules. Each private bidding module may use a user profile, attributes of information items, and attributes of the content to select one or more previously stored information items for possible presentation to the user. For each selected information item, the private bidding modules submit a bid to the auction module. The auction module determines a winning bid and provides the corresponding information item to an application for display within the content.

These embodiments of the invention protect the users' privacy while still providing the advantages of individualized auctions for placement of information items to information item providers, information item brokers, and content publishers. In this system, user profiles are collected and maintained within the client system. Because neither the private user information in user profiles, nor the user behavior information used to derive those profiles, are ever communicated to the information item broker, information item providers, or content publishers, user privacy is preserved.

Additionally, the auction module and private bidding modules within the client system operate autonomously in conducting auctions, selecting previously stored information items for possible presentation, and submitting bids for placements of the selected information items. Because the auction process is conducted within the client system, the information item broker and information item providers never access private user information and thus user privacy is preserved.

In an embodiment, the results of auctions are communicated to the broker to aid in billing charging information item providers and compensating publishers for successful placements. However, these results do not include any personally identifiable information and are communicated to the broker through a proxy and using encryption to ensure user privacy.

Brief description of the drawings

The above and further aspects and advantages of the present invention may better be understood by referring to the following description taken in conjunction with the accompanying drawings, in which:

Figures 1A-1B are diagrams of systems according to embodiments of the invention;

Figure 2 illustrates an example method for distributing information items, profiling information, and bid information to clients in preparation for private online advertising auctions according to an embodiment of the invention;

Figure 3 illustrates an example method for conducting a private online advertising auction according to an embodiment of the invention;

Figure 4 illustrates an example method for processing online auction results to determine pricing and compensation according to an embodiment of the invention; and

Figure 5 illustrates an example computer system suitable for implementing embodiments of the invention.

Detailed Description

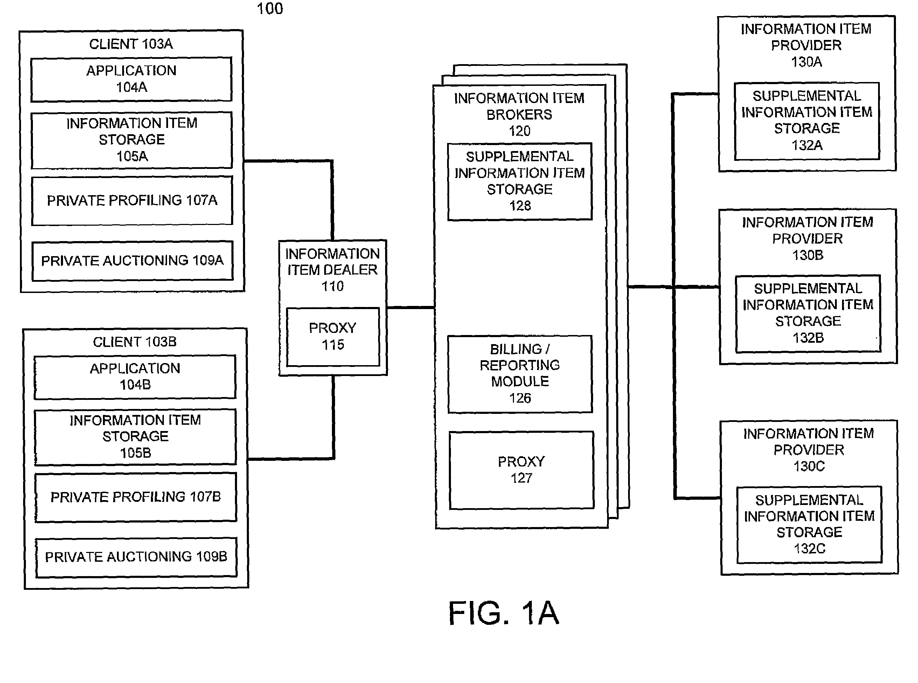

Figures 1A-1B are diagrams of systems according to embodiments of the invention. Figure 1A illustrates an example private advertising system 100 according to an embodiment of the invention. System 100 includes one or more client systems, including clients 103A and 103B. Clients 103 include computer systems and electronic communication devices capable of accessing information over a network. Examples of clients 103 include computers in the form of desktop or portable personal computers; mobile communication devices, including mobile telephones, handheld and tablet computers, portable media players, and electronic gaming devices; network connected devices adapted to connect with televisions, including set-top boxes and game consoles; and any other electronic devices capable of communicating via wired and/or wireless network interfaces with electronic communications networks, including local-area networks and wide area networks, such as the Internet, cellular data networks, cable television data networks, and one-way or two-way satellite data networks.

Each of the client systems 103A and 103B include one or more applications 104, such as 104A and 104B, adapted to retrieve information via an electronic communications network. Examples of applications 104 include web browsers; game applications; application software for any function or purpose; digital distribution platforms for distributing application software and/or video, audio, text, or other content; and operating systems and system-level resources capable of being accessed by other applications. Each of the client systems 103 may have one or more applications 104.

Additionally, each of the client systems 103 includes an information item storage, such as 105A and 105B, for storing one or more information items. Example information items include text, images, video, animation, speech, audio, three-dimensional computer graphics data and images or animation rendered there from, hypertext, graphical user interface widgets or controls, interactive content such as games, and computer-executed logic in the form of programs or scripts. Information items may be used for advertisements or for other purposes, such as providing information to users or soliciting user feedback. Examples of information items can include pop-up and banner advertisements, as well as advertisements appearing within the display or user interface of an application.

Each of the information item storages 105 may store information items targeted to their respective clients 103 or the user of their respective clients 103. Information items may be targeted at users or the clients 103 based on users' interests, demographic information including factors such as age, gender, location, income, and marital status, psychographic information including factors such as desire for prestige, desire for safety, and desire for good value, or attributes of the clients 103 such as whether the client is a laptop or a smart phone. Additionally, each of the information item storages 105A and 105B may store information items that are not targeted at any specific user or client. In an embodiment, information items storages 105 are implemented as databases or other data structures, such as arrays.

In an embodiment, each of the clients 103 include private profiling modules 107, such as 107A and 107B. Each private profiling module is adapted to collect information about its client and/or the user of the client to build a profile of their attributes, interests, and/or preferences. Each of the private profiling modules 107 is also adapted to communicate with brokers in a manner that preserves user privacy.

In an embodiment, each of the clients 103 includes a private auctioning modules 109, such 109A and 109B. Each of the private auctioning modules is used to select locally stored information items from their respective clients' information item storages 105 for presentation to their respective users. In an embodiment, private auctioning modules may use auctioning techniques to select information items to present to users. In this embodiment, the auctioning modules allow one or more providers of information items, such as advertisers, to bid for placement of their information items within advertisement space or slots included in content from a publisher. As described in detail below, the auctioning modules perform this bidding and information item selection within each client so as not to compromise user privacy. The auctioning modules 109 include privacy-preserving reporting functions to enable charging information item providers for their successful bids and to compensate publishers for providing space for information items to be displayed. Each of the private auctioning modules 109 is also adapted to communicate with brokers in a manner that preserves user privacy.

In one embodiment of the invention, the private profiling modules 107, private auctioning modules 109, and information item storages 105 are standalone software applications executed by the clients in conjunction with other applications 104, such as web browsers and application software. In another embodiment, the private profiling modules 107, private auctioning modules 109, and information item storages 105 are integrated within another software application, such as a web browser or application software. In still another embodiment, the private profiling modules 107, private auctioning modules 109, and information item storages 105 are integrated within an operating system or other system-level resource of the client 103.

In an embodiment, clients 103 work in conjunction with one or more information item brokers 120, one or more information item dealers 110, and one or more information item providers 130, such as information item providers 130A, 130B, and 130C. Information item providers 130 are entities that provide information items to be distributed to clients 103 for presentation to users. Examples of information item providers include advertisers.

In an embodiment, the clients 103 report user interactions with information items to one or more information item brokers 120. Examples of information item brokers may include advertising networks, advertising distributors and resellers, and data aggregators. For example, if a user requests additional information associated with an advertisement by clicking on the advertisement, the client 103 may report this user interaction to the information item broker 120. The information item broker 120 may use this report of the user interaction for purposes of tracking and billing information item providers 130 using billing and reporting module 126 and/or for providing supplemental information items to the client 103 from supplemental information item storage 128 and/or 132. In a further embodiment, a supplemental information item may act as the target of additional user interactions, which may result in the retrieval and display of additional supplemental information items.

Embodiments of the invention maintain the privacy of the users of the clients 103 by using one or more proxies and/or encryption to facilitate communications between the clients 103 and one or more information item brokers 120. In one embodiment, the clients 103 encrypt communications with the information item broker 120 using a public encryption key associated with the information item broker 120. The encrypted communications are then sent from the clients 103 to the information item brokers 120 through one or more information item dealers 110, each of which includes a proxy 115. Upon receiving client communications via an information item dealer 110, an embodiment of the information item broker 120 uses a private encryption key to decrypt the communication from the clients 103. Similarly, an embodiment of the information item broker 120 encrypts communications with the clients 103 using symmetric encryption keys shared with the clients 103 and sends the encrypted communications to the clients 103 via one or more information item dealers 110. The clients 103 may then decrypt communications from the information item broker 120 using the decryption key associated with the information item broker 120.

Alternative embodiments of the client 103 and information item broker 120 may use other types and combinations of public and private asymmetric keys and/or private symmetric keys to hide the contents of their communications from intermediaries such as proxies, information item dealers, or other entities.

In this embodiment of the invention, neither the information item dealer 110, which includes the proxy 115, nor the information item brokers 120 may obtain enough information to violate the user's privacy. The use of the information item dealer 110 and proxy 115 hides the locations of the clients 103 from the information item brokers 120 and information item providers 130, such as advertisers. Also, the encrypted communications do not include any information identifying a specific user. Thus, the information item brokers 120 receive no information that can identify the clients 103. The information item dealer 110 knows the clients' network addresses, but cannot decrypt the communications between the clients 103 and the information item brokers 120, so the information item dealer 110 learns nothing about the clients 103 other than the fact that some interaction has taken place. As long as the operators of an information item broker 120 and information item dealer 110 do not collude, neither can learn which interactions have taken place. Further information on this technique of communicating via a proxy to maintain user privacy may be found in co-pending U.S. Patent Application No. 12/552,549, which is incorporated by reference herein.

In an embodiment, the billing/reporting module 126 of an information item broker 120 uses the received notifications of user interactions with information items to provide one or more reports summarizing the interactions of one or more users. Embodiments of the information item broker 120 may provide reports to one or more of the information item providers 130.

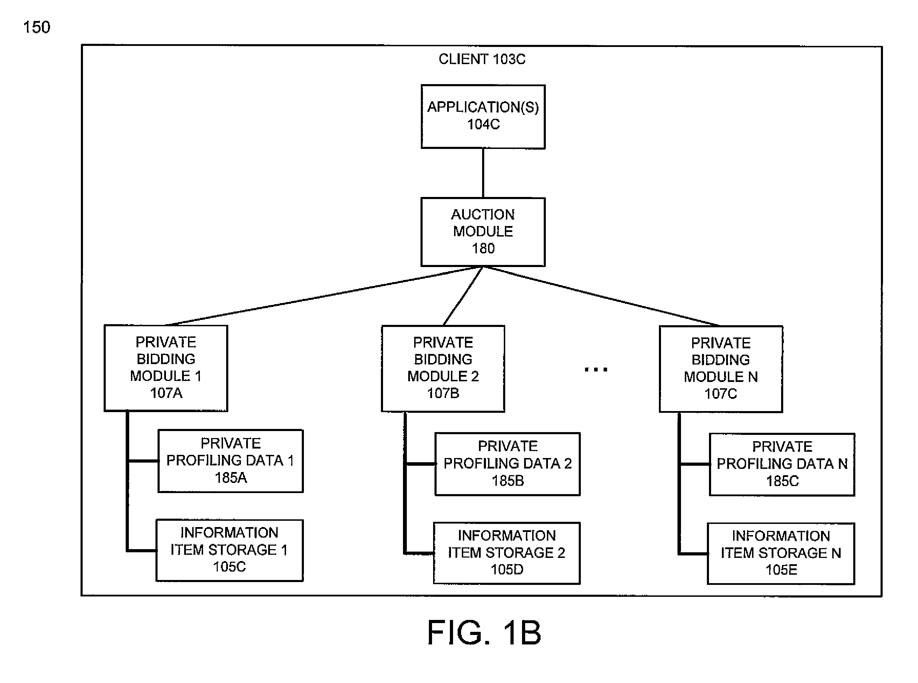

Figure 1B illustrates an example client system 103C according to an embodiment of the invention. Client system 103C includes one or more applications 104C capable of presenting information items to users, such as web browsers, application software, and game software. Client system 103C includes at least one auction module 180 and at least one private bidding module 107 to implement the private auctioning system 109 described above. In an embodiment, auction module 180 is adapted to interface with one or more private bidding modules 107, such as 107A, 107B, and 107C. Each of the private bidding modules 107 is adapted to operate with a different, independent broker.

In an embodiment, each of the private bidding modules 107 is associated with its own information item storage, from which it can store information items received from its broker and select information items for presentation to users. For example, private bidding modules 107A, 107B, and 107C include are associated with information item storages 105, such as 105C, 105D, and 105E.

Similarly, the private bidding modules 107 each include one or more sets of private profiling data 185. Each set of private profiling data 185 includes profiling attributes of one or more users of client system 103C. Examples of profiling attributes of users include user demographics, user interests, user intents, and user preferences or psychographics. Examples of user demographic profiling attributes include age, gender, location, spoken language, and income level. In general, the profiling attributes included in profiling data are determined by observing user accesses and interactions with different content. In an embodiment, profiling data 185 is collected and maintained entirely within client system 103C. By preventing any profiling data from being shared with information item brokers, information item providers, or any other outside entities, the user's privacy is preserved. To this end, techniques for creating and utilizing private online profile data are described in "Profiling Users in a Private Online System," U.S. Pat. Appl. No. 13/246,431, filed September 27, 2011, which is incorporated by reference herein for all purposes.

In an embodiment, the auction module 180 receives requests for information item placements from one or more applications 104 within a client system, selects one or more private bidding modules 107 to participate in auctions to provide information items in these placements, solicits and receives bids from the private bidding modules 107, and then selects one or more auction winners. Auction module 180 then provides information items corresponding with the winning bids to the application 104 for display or other presentation within the application's placements.

As described in detail below, the use of the auction module 180 and private bidding modules 107 within the client system protects the user's privacy while still providing the advantages of individualized auctions for placement of information items to information item providers, information item brokers, and content publishers. In this system, user profiles are collected and maintained within the client system. Because the private user information in user profiles is never communicated to the information item broker, information item providers, or content publishers, user privacy is preserved.

Additionally, the auction module 180 and private bidding modules 107 within the client system operate autonomously in conducting auctions, selecting information items for possible presentation, and submitting bids for placements of the selected information items. Because the auction process is conducted within the client system, the information item broker and information item providers never access private user information and thus user privacy is preserved.

The results of auctions are communicated to the broker to aid in charging information item providers and compensating publishers for successful placements. However, these results do not include any personally identifiable information and are communicated to the broker through a proxy and using encryption to ensure user privacy.

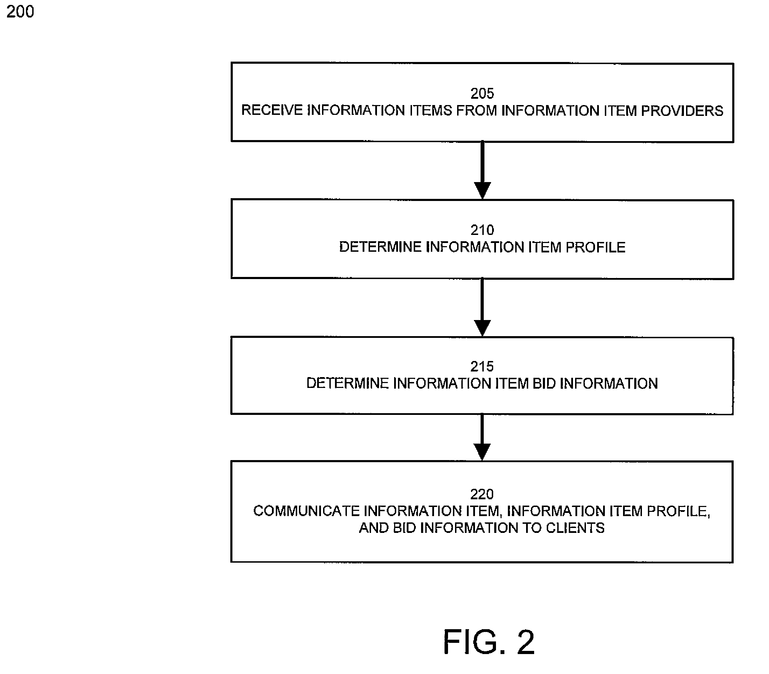

Figure 2 illustrates an example method 200 for distributing information items, profiling information, and bid information to clients in preparation for private online advertising auctions according to an embodiment of the invention. In step 205, an information item broker received one or more information items from an information item provider.

In general, the information items are targeted to reach specific types of users, such as users with specific demographics, interests, intents, and preferences or psychographics, and/or to be presented with specific types of content. These targeting attributes are collectively referred to as an information item profile.

Step 210 determines at least one information item profile for each received information item. In an embodiment, the information item provider includes an information item profile with each information item received by step 205. In another embodiment, the broker and/or a third-party assigns information item profiles to received information items. In still a further embodiment, step 210 may rely on any combination of the information item provider, the information item broker, and/or the third party to provide portions of an information item profile. In some cases, an information item may be associated with multiple information item profiles to indicate that this information item should be targeted to multiple types of users and/or content.

Step 215 determines bid information for the received information items. The bid information includes the bid price that the information item broker is willing pay to present an information item within a specific placement in an application. Like information item profiles, the bid information may be created by the information item provider, the information item broker, and/or a third-party entity. In an embodiment, an information item provider gives the broker a price or expected value that it is willing to pay to present its information item to a user. This price may be based on a pay-per-view (PPV) or pay-per-click (PPV) revenue model. Based on the information item provider's price or expected value, the information item broker determines bid information.

In an embodiment, if the revenue model is PPV, then in an embodiment of step 215 the broker sets a bid price that is reduced from the information item provider's price to reflect the fraction of the revenue bid that goes to the content publisher. For instance, the broker may have a policy that a certain fixed percent (e.g. 20%) is taken off for the broker, and the rest goes to the content publisher. In another example, the broker may dynamically modify the percentage depending on how often the information item provider or information item is winning auctions for information item placement.

In another embodiment of step 215, if the revenue model is PPC, then the broker must set the bid to reflect the expected value of showing the ad, which is roughly equivalent to the advertiser bid multiplied by the probability that the ad will be clicked if shown (denoted as $B \times P(C)$). In a further embodiment, the actual bid amount will generally be something less than this value, so that the broker may make a profit. The probability of a click $P(C)$ may vary depending on the match quality, where match quality reflects how well the user profile matches the information item profile. Because of this, the broker may modify the bid information differently depending the value of $P(C)$ for the given match quality. In a further embodiment, the bid information may include estimated or historical click probabilities to assist the client system in selecting appropriate information items for presentation.

In a further embodiment, bid information may be expressed as a single value or a range of possible bid values. Increments for increasing or decreasing a bid value based on attributes of the user and/or content may also be included in the bid information. In still a further embodiment, formulas, look-up tables, heuristics, and logical expressions may be included in the bid information for evaluation by private bidding modules to determine specific bid prices.

Following the determination of the bid information and the information item profile for each of the received information items, step 220 communicates these information items, their information item profiles, and the bid information to one or more client systems. In an embodiment, this communication may utilize encryption and/or a proxy to preserve user privacy, as described above.

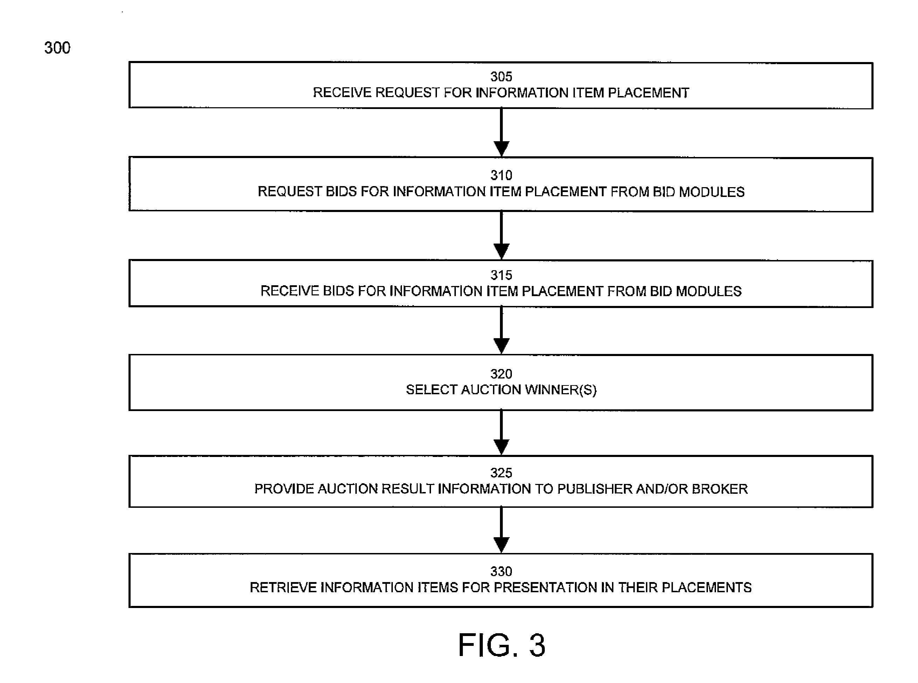

Figure 3 illustrates an example method 300 for conducting a private online advertising auction according to an embodiment of the invention. Step 305 receives a request for information item placement from an application. In an embodiment, a web page or other content from a publisher includes one or more locations or positions, referred to as placements, for inserting information items for presentation to users. Upon accessing this content, the application identifies the available placements and sends one or more requests for information item placements to the auction module in the client system.

In an embodiment, the content may include or link to placement attributes to specify or limit the type of information items that may be presented within a placement. For example, one type of placement attribute may specify private bidding modules and/or associated information item brokers that are allowed or disallowed from participating in the auction for presenting information items in this placement. Similarly, another type of placement attribute specifies information item providers and/or specific topics of information items that are allowed or disallowed from participating in the auction.

In another example, an auction procedure placement attribute specifies how the auction should be run. Examples of auction procedures that may be specified with this attribute include "present winner," "report winning bid," "minimum bid," and no auction."

For the "present winner" auction procedure, an auction module selects the information items corresponding with the winning bids and provides them to the application for presentation in their respective placements.

For the "report winning bid" auction procedure, the auction module identifies the winning bid or bids (if there are multiple placements up for auction separately) and reports these bids to the content publisher or to a third-party, such as an ad exchange operating real-time bidding (RTB) for the content publisher. For each winning bid, the content publisher or third party decides whether to show the information item associated with the auction module's winning bid or whether to show an alternate information item. The content publisher or third party then reports its decision to the auction module. In this auction procedure, the content publisher or other third-party may provide the alternate information item to the auction module and/or the application directly or via a link or URL.

In the "minimum bid" auction procedure, the content publisher specifies a minimum acceptable bid for the placement. If the bids from the private bidding modules are below this minimum, then the auction module may select an alternate information item for presentation or contact the content publisher for additional instructions. In another variation of this procedure, if all of the private bidding modules refuse to bid for a particular placement, then the auction module may select an alternate information item for presentation or contact the content publisher for additional instructions.

In the "no auction" auction procedure, the content publisher indicates that it wants to assign a placement to one or more specific private bidding modules, rather than run an auction. Since the publisher may not be sure which private bidding modules are resident on any given client system, it may provide a prioritized list of private bidding modules and/or information item brokers for a placement or group of placements. The private bidding module with the highest priority and with at least one information item available for placement may then provide an information item to the application for placement. The content publisher may also specify a fallback procedure in case none of the private bidding modules in the list are resident on a client system or able to place an information item. For example, the auction module may conduct an auction among the remaining, non-listed private bidding modules or select an alternate information item for presentation.

Another type of placement attribute can specify an auction type. Examples of auction types are first price, where the price bid is the price paid, and second price, where the price paid is identical to or marginally higher than the price bid by the next highest bidder.

Additional placement attributes may include a content publisher ID, content ID, and/or content address. The auction manager and/or private bidding modules may use these placement attributes to help decide how much to bid. These placement attributes are also used for reporting to the broker.

Another placement attribute includes a placement description to specify the size and relative prominence or position in a page of the placement. A further placement attribute may specify the type of information items that may or may not be assigned to a placement. Types of information items include text, image, animation, video, with or without sound, and interactive.

Yet another placement attribute includes a context attribute that specifies the context of the content. Examples of context include the type of content (news, shopping, blog), and the topic of the content (tennis, movies, politics). Still another placement attribute includes the content quality, which indicates the overall quality of the content, in terms of content influence, reputation, and/or prestige. Information item quality is another type of placement attribute to indicate the quality of information item that may be presented in a placement.

Another placement attribute controls which information item providers may or may not put an information item in the placement. This allows, for instance, a web site operator to prevent its competitors from placing information items. Similarly, another placement attribute controls which types of information items may be placed. For instance, it may allow or disallow information items with certain profile parameters, such as a given interest.

A further placement attribute includes publisher reporting attribute to specify how and what the auction module may report to the content publisher after the auction completes. For example, this attribute may indicate that there is no reporting (in which case the brokers may report to the publisher separately), reporting within the same HTTP session, or that the auction manager should report in a separate session. In this latter case, the publisher may provide a URL for reporting purposes. The attribute may indicate what type of data to report. Reporting data specified by this placement attribute may include the amount of the winning bid, the private bidding module or associated broker that submitted the winning bid, the information item provider, the identity of the information item, a URL for the information item, and/or the information item profile.

These exemplary placement attributes may be included in content from publishers in any arbitrary combination or sub-combination and optionally with any other type of arbitrary information specified by publisher.

In step 310, the auction module selects one or more private bidding modules eligible to bid for one or more placements in the content. In an embodiment, step 310 considers the placement attributes of one or more placements in the content for selecting these private bidding modules. Step 310 then sends bid requests to the selected private bidding modules. These bid requests may optionally include some or all of the placement attributes to assist these private bidding modules in determining their bids.

Each private bidding module uses bid requests and any included information, such as placement attributes, private profiling information about the user of the client device, and/or information item profiles and bid information stored on the client device to select one or more information items for possible presentation in the available placements and to determine bid values for each selected information item. In an embodiment, each private bidding module may provide different bids for different types, positions, numbers, and combinations of placements. For instance, a private bidding module may bid for two or more individual placements separately as well as an additional bid for two or more placements in combination.

For the private bidding module to produce a bid for the auction manager, it must rank the information items that it has stored and generate bids for one or more of the highest ranked ads. In an embodiment, upon receiving a bid request from the auction module, a private bidding module determines a match quality for each of at least a portion of its stored information items based on the placement attributes, information item profile, and/or the user profile. The private bidding module then creates bids based on the match quality and/or the bid information. It uses these computed bids to rank its own information items, and if it is competing with other private bidding modules, to participate in the auction. The private bidding module may submit its highest priced bid to the auction module or a combination of bids that has the highest total price.

As discussed above, the bids submitted by private bidding modules reflect the amount of money their respective brokers (and ultimately the information item providers) will pay for showing these information items. Because the private bidding module receives bid information from the broker, it is the responsibility of the broker to select bid information that reflects what the broker is actually willing to pay for presenting the information item to a given user within a given placement in the content.

The match quality may include a measurement or quantification of the correlation between the information item profile, the user profile, and the context attribute and other placement attributes of the content. In a PPV revenue model, the information item provider and broker must gauge the value of view, for instance by the probability of a view leading to a purchase or the influence of a brand. In a PPC revenue model, the information item provider and broker likewise must gauge the probability and value of a click or other type of user interaction with the information item.

Match quality may be quantified in numerous ways, including as a single number, a range of numbers, discrete choices (e.g. low, medium, or high match), and/or a set or tuple of numbers or ranges of numbers. In the latter case, each element of the set or tuple corresponds with a different aspect of match quality, such as the quality of match between the information item and the content and the quality of match between an information item and a user profile. Further embodiments may determine separate match quality values for aspects of the user profile and information item profiles, such as separate match quality values based on interests, characteristics, and demographics.

In an embodiment, the private bidding module uses formulas, look-up tables, heuristics, and logical expressions included in the bid information to determine a specific bid price based on the match quality value or values.

A private bidding module may respond to a bid request with zero, one, or more than one bid for presenting information items in one or more placements in the content. The auction module receives these bids (and optionally messages declining to bid) for the private bidding modules in step 315.

In step 320, the auction module selects one or more winning bids. In an embodiment, the auction module accepts the bid or combination of bids that provide the highest total price for the available placements in the content. In an embodiment, the auction may optionally inform the losing private bidding modules as well as the winning private bidding module of the auction results and optionally the rank of each bid for a given placement.

Step 325 provides each information item broker with a report of auction results from its corresponding private bidding module. In an embodiment, this report may be encrypted with the broker's public key and transmitted via a proxy to preserve user privacy. Each report may include the results of one or more auctions and for each auction may include information on the attributes of the placements bid on, bid prices, the results of the bidding including optionally bid ranking and the winning price, and attributes of the publisher and content. This report may be used by the broker to determine how much to pay to the publisher and how much to charge the advertiser. The information item broker may also use the report information alone or in aggregate to determine ways to improve its advertising performance. Some or all of the report information may also be passed on to the information item providers, in detailed or aggregated form, to help the advertisers improve their advertising performance and provide accounting of their expenses.

For the "report winning bid" auction procedure, an embodiment of step 325 identifies the winning bid or bids and reports these bids to the content publisher or to a third-party, such as an ad exchange operating real-time bidding (RTB) for the content publisher. For each winning bid, the content publisher or third party decides whether to show the information item associated with the auction module's winning bid or whether to show an alternate information item and then reports its decision to the auction module. In this auction procedure, the content publisher or other third-party may provide the alternate information item to the auction module and/or the application directly or via a link or URL.

Step 330 retrieves the information items corresponding with the winning bids for presentation in their placement. In an embodiment, the auction module provides the application with the information items corresponding with the winning bids. In another embodiment, the auction module provides the application with links, storage addresses, or indices to be used by the application to retrieve the winning information items.

In embodiments of method 300 that are not using the "report winning bid" auction procedure, the order of steps 325 and 330 may be reversed.

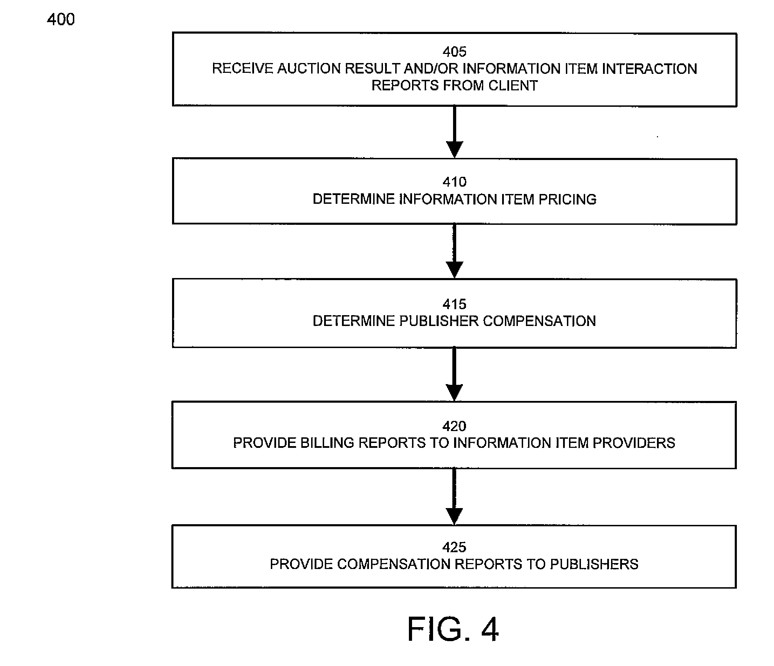

Figure 4 illustrates an example method 400 for processing online auction results to determine pricing and compensation according to an embodiment of the invention. In step 405, the information item broker receives reports from one or more client systems of the results of one or more auctions for placements to present information items to users. These reports may be encrypted and communicated via a proxy to protect user privacy.

In step 410, the information item broker determines the price for the information item provider for each information item associated with a winning bid. The reports provided by the client system may include the identities of the content publisher and the information item provider, the prices of the winning and optionally losing bids (e.g. for use with second price auctions), the match quality of the winning and losing bids, and/or the identities of the winning and losing information items. The information item broker uses this information in the report and/or bid information associated with information items previously sent to client systems to determine the information item pricing for the information item provider.

In another embodiment, if a PPC revenue model is used, step 410 may determine the information item pricing using all or a portion of the bid report information described above and a report on user clicks or other interactions with presented information. In a further embodiment, bid information may be included in the click or user interaction report. If the auction is a first price auction, then an embodiment of step 410 sets the information item provider price to the amount that the information item provider previously specified as its price. If the auction is a second price auction, then an embodiment of step 410 sets the information item price as:

$$B_N \times \frac{P(C)_n}{P(C)_c},$$

where $B_N$ is the second highest bid, $P(C)_n$ is the click probability of the information item associated with this second highest bid, and $P(C)_c$ is the click probability of the information item associated with the winning bid. In further embodiments, this expression is used as a component of the information item price, which is then further modified by the information item broker, for instance to increase or decrease its profit margin, or to influence information item provider behavior.

Step 415 determines publisher compensation for the placement of the information items in the publisher content. In an embodiment, step 415 sets publisher compensation to the value of the winning bid or a value based on the second highest bid, in the case of a second price auction. In a further embodiment, this value is set by the auction module in selecting the winning bid and included in a report provided to the information item broker.

Step 420 may use reports received from one or more client systems to produce billing reports for each of the information item providers. These reports may contain detailed or aggregate information about content publishers associated with auctions, the prices of winning and losing bids, and/or the match qualities associated with winning and losing bids. This information may be used to help the information item provider manage the content, profiles, and bids of its information items.

Similarly, step 425 may aggregate compensation information reports received from one or more client systems to produce compensation reports for each of the content publishers. These reports may contain detailed or aggregate information the information item providers associated with auctions, the prices of winning and losing bids, the match qualities associated with winning and losing bids, and the identities of information items. This information may be used to help the publisher manage publisher content, placement types and locations, and placement attributes.

In alternate embodiments, some or all of the above-described modules, such as the auction module, private bidding modules, and/or information item storages, are implemented within a router, switch, firewall, gateway, wireless access point, broadband modem or network interface, and/or any other networking device. In these embodiments, the networking device is located on the client's local network and has full access to the client's incoming and outgoing network traffic. In these embodiments, the networking device intercepts network traffic between content publishers and clients. The networking device processes profiling restrictions included in the network traffic and provides profiling information to specified private profiling modules.

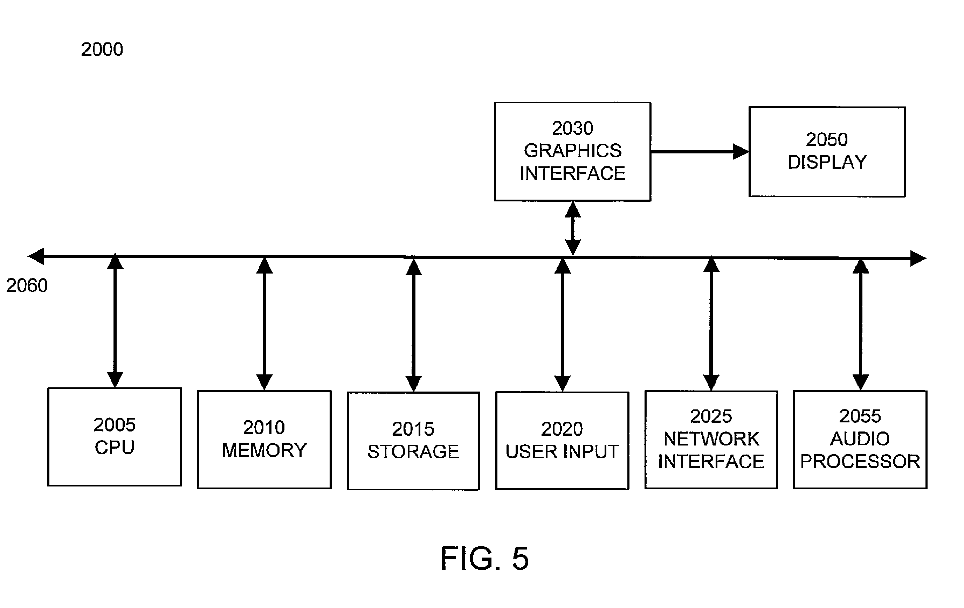

Figure 5 illustrates an example computer system 2000 suitable for implementing embodiments of the invention. Figure 5 is a block diagram of a computer system 2000, such as a personal computer, server computer, video game console, personal digital assistant, or other digital device, suitable for practicing an embodiment of the invention. Computer system 2000 includes a central processing unit (CPU) 2005 for running software applications and optionally an operating system. CPU 2005 may be comprised of one or more processing cores. Memory 2010 stores applications and data for use by the CPU 2005. Storage 2015 provides non-volatile storage for applications and data and may include fixed or removable hard disk drives, flash memory devices, and CD-ROM, DVD-ROM, Blu-ray, HD-DVD, or other magnetic, optical, or solid state storage devices.

User input devices 2020 communicate user inputs from one or more users to the computer system 2000, examples of which may include keyboards, mice, joysticks, digitizer tablets, touch pads, single or multitouch touch screens, still or video cameras, and/or microphones. Network interface 2025 allows computer system 2000 to communicate with other computer systems via an electronic communications network, and may include wired or wireless communication over local area networks and wide area networks such as the Internet. An optional audio processor 2055 is adapted to generate analog or digital audio output from instructions and/or data provided by the CPU 2005, memory 2010, and/or storage 2015. The components of computer system 2000, including CPU 2005, memory 2010, data storage 2015, user input devices 2020, network interface 2025, and audio processor 2055 are connected via one or more data buses 2060.

A graphics interface 2030 is further connected with data bus 2060 and the components of the computer system 2000. The graphics interface 2030 is adapted to output pixel data for an image to be displayed on display device 2050. Display device 2050 is any device capable of displaying visual information in response to a signal from the computer system 2000, including CRT, LCD, plasma, OLED, and SED displays. Computer system 2000 can provide the display device 2050 with an analog or digital signal.

In embodiments of the invention, CPU 2005 is one or more general-purpose microprocessors having one or more homogenous or heterogeneous processing cores. Computer system 2000 may further implement one or more virtual machines for executing all or portions of embodiments of the invention.

Further embodiments can be envisioned to one of ordinary skill in the art after reading the attached documents. In other embodiments, combinations or subcombinations of the above disclosed invention can be advantageously made. The block diagrams of the architecture and flow charts are grouped for ease of understanding. However it should be understood that combinations of blocks, additions of new blocks, re-arrangement of blocks, and the like are contemplated in alternative embodiments of the present invention.

The specification and drawings are, accordingly, to be regarded in an illustrative rather than a restrictive sense. It will, however, be evident that various modifications and changes may be made thereunto without departing from the broader spirit and scope of the invention as set forth in the claims.

**Claims**

1. A method for selecting information items for presentation to a user of a client device, the method comprising:

storing, in a memory of a device located within a local network including a client computer, information items;
receiving at least one available placement for presenting one of the information items to the user;
initiating an auction for the available placement between a first set of private bidding modules executing on the device;
receiving bids from at least a portion of the first set of private bidding modules executing on the device;
selecting one of the bids as a winning bid of the auction; and
providing a selected information item for presentation to the user in the available placement.

2. The method of claim 1, wherein the selected information item is included in the previously stored information items.

3. The method of claim 1, wherein initiating the auction includes selecting a subset of private bidding modules executing on the device as the first of private bidding modules.

4. The method of claim 2, wherein selecting the subset of private bidding modules is based at least in part on a placement attribute associated with the available placement.

5. The method of claim 1, wherein initiating the auction includes specifying auction parameters based at least in part on a placement attribute associated with the available placement.

6. The method of claim 1, wherein initiating the auction includes specifying an auction type based at least in part on a placement attribute associated with the available placement.

7. The method of claim 1, wherein initiating the auction comprises providing a placement attribute to the private bidding modules.

8. The method of claim 1, wherein each of the bids includes a bid price based on its respective private bidding module's expected value for presenting one of previously stored information items to the user via the available placement.

9. The method of claim 8, wherein at least one of the private bidding module's expected value is based at least in part on bidding information associated with the stored information items.

10. The method of claim 8, wherein at least one of the private bidding module's expected value is based at least in part on a match quality determined for at least one of the stored information items.

11. The method of claim 1, comprising:

communicating a report to at least one destination system, wherein the report includes an identification of the selected information item.

12. The method of claim 11, wherein the destination system includes at least one information item broker.

13. The method of claim 11, wherein the destination system includes at least one content publisher.

14. The method of claim 13, wherein the selected information item is received from the content publisher in response to the report.

15. The method of claim 11, wherein the report includes a price value associated with the selected one of the bids.

16. The method of claim 11, wherein the report includes an attribute associated with the selected information item.

**17.** The method of claim 11, wherein communicating the report comprises :

> encrypting the report using an encryption key of the information item broker; and transmitting the encrypted report to the destination system via a proxy computer adapted to conceal a network address of the device from the destination system.

**18.** The method of claim 1, wherein the selected information item is received from an information item broker.

**19.** The method of claim 1, wherein the device includes a networking device adapted to intercept network traffic between the client computer and at least one content publisher.

**20.** The method of claim 1, wherein the device is the client computer.

FIG. 1A

150

CLIENT 103C

APPLICATION(S)
104C

AUCTION
MODULE
180

PRIVATE
BIDDING
MODULE 1
107A

PRIVATE
BIDDING
MODULE 2
107B

· · ·

PRIVATE
BIDDING
MODULE N
107C

PRIVATE
PROFILING DATA 1
185A

PRIVATE
PROFILING DATA 2
185B

PRIVATE
PROFILING DATA N
185C

INFORMATION
ITEM STORAGE 1
105C

INFORMATION
ITEM STORAGE 2
105D

INFORMATION
ITEM STORAGE N
105E

FIG. 1B

200

```
┌─────────────────────────────────────────────────────────┐
│                          205                              │
│   RECEIVE INFORMATION ITEMS FROM INFORMATION ITEM         │
│                      PROVIDERS                            │
└─────────────────────────────────────────────────────────┘
                            │
                            ▼
┌─────────────────────────────────────────────────────────┐
│                          210                              │
│           DETERMINE INFORMATION ITEM PROFILE              │
└─────────────────────────────────────────────────────────┘
                            │
                            ▼
┌─────────────────────────────────────────────────────────┐
│                          215                              │
│         DETERMINE INFORMATION ITEM BID INFORMATION        │
└─────────────────────────────────────────────────────────┘
                            │
                            ▼
┌─────────────────────────────────────────────────────────┐
│                          220                              │
│   COMMUNICATE INFORMATION ITEM, INFORMATION ITEM PROFILE, │
│              AND BID INFORMATION TO CLIENTS               │
└─────────────────────────────────────────────────────────┘
```

FIG. 2

EP 2 575 100 A1

300

```
┌─────────────────────────────────────────────────────────────────────┐
│                                 305                                   │
│              RECEIVE REQUEST FOR INFORMATION ITEM PLACEMENT           │
└─────────────────────────────────────────────────────────────────────┘
                                  │
                                  ▼
┌─────────────────────────────────────────────────────────────────────┐
│                                 310                                   │
│       REQUEST BIDS FOR INFORMATION ITEM PLACEMENT FROM BID MODULES    │
└─────────────────────────────────────────────────────────────────────┘
                                  │
                                  ▼
┌─────────────────────────────────────────────────────────────────────┐
│                                 315                                   │
│       RECEIVE BIDS FOR INFORMATION ITEM PLACEMENT FROM BID MODULES    │
└─────────────────────────────────────────────────────────────────────┘
                                  │
                                  ▼
┌─────────────────────────────────────────────────────────────────────┐
│                                 320                                   │
│                       SELECT AUCTION WINNER(S)                        │
└─────────────────────────────────────────────────────────────────────┘
                                  │
                                  ▼
┌─────────────────────────────────────────────────────────────────────┐
│                                 325                                   │
│      PROVIDE AUCTION RESULT INFORMATION TO PUBLISHER AND/OR BROKER    │
└─────────────────────────────────────────────────────────────────────┘
                                  │
                                  ▼
┌─────────────────────────────────────────────────────────────────────┐
│                                 330                                   │
│      RETRIEVE INFORMATION ITEMS FOR PRESENTATION IN THEIR PLACEMENTS  │
└─────────────────────────────────────────────────────────────────────┘
```

FIG. 3

EP 2 575 100 A1

400

EP 2 575 100 A1

| 405<br>RECEIVE AUCTION RESULT AND/OR INFORMATION ITEM INTERACTION<br>REPORTS FROM CLIENT |
|---|

↓

| 410<br>DETERMINE INFORMATION ITEM PRICING |
|---|

↓

| 415<br>DETERMINE PUBLISHER COMPENSATION |
|---|

↓

| 420<br>PROVIDE BILLING REPORTS TO INFORMATION ITEM PROVIDERS |
|---|

↓

| 425<br>PROVIDE COMPENSATION REPORTS TO PUBLISHERS |
|---|

FIG. 4

2000

```
                                            ┌──────────────┐         ┌──────────────┐
                                            │     2030     │         │     2050     │
                                            │   GRAPHICS   │────────▶│   DISPLAY    │
                                            │  INTERFACE   │         │              │
                                            └──────┬───────┘         └──────────────┘
                                                   │
                                                   ▲
                                                   │
                                                   ▼
◀──────────────┬──────────┬──────────┬─────────────┴─────┬──────────┬──────────────▶
               ▲          ▲          ▲                   ▲          ▲          ▲
2060           │          │          │                   │          │          │
               ▼          ▼          ▼                   ▼          ▼          ▼
        ┌──────────┐┌──────────┐┌──────────┐┌──────────┐┌──────────┐┌──────────┐
        │   2005   ││   2010   ││   2015   ││   2020   ││   2025   ││   2055   │
        │   CPU    ││  MEMORY  ││ STORAGE  ││USER INPUT││ NETWORK  ││  AUDIO   │
        │          ││          ││          ││          ││INTERFACE ││PROCESSOR │
        └──────────┘└──────────┘└──────────┘└──────────┘└──────────┘└──────────┘
```

FIG. 5

EP 2 575 100 A1

**EUROPEAN SEARCH REPORT**

Application Number

EP 12 18 6264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 689 684 B2 (DONOHO DAVID LEIGH [US] ET AL) 30 March 2010 (2010-03-30) * abstract * ----- | 1-20 | INV. G06Q30/02 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 20 December 2012 | Giemsa, Falk |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 2 575 100 A1

## ANNEX TO THE EUROPEAN SEARCH REPORT
## ON EUROPEAN PATENT APPLICATION NO.

EP 12 18 6264

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2012

| Patent document cited in search report | | Publication date | Patent family member(s) | | Publication date |
|---|---|---|---|---|---|
| US 7689684 | B2 | 30-03-2010 | AU | 762054 B2 | 19-06-2003 |
| | | | AU | 5791499 A | 21-03-2000 |
| | | | CA | 2344521 A1 | 09-03-2000 |
| | | | CN | 1344398 A | 10-04-2002 |
| | | | EP | 1116148 A1 | 18-07-2001 |
| | | | JP | 2002523841 A | 30-07-2002 |
| | | | NZ | 510258 A | 26-11-2002 |
| | | | US | 6263362 B1 | 17-07-2001 |
| | | | US | 6801929 B1 | 05-10-2004 |
| | | | US | 2001042104 A1 | 15-11-2001 |
| | | | WO | 0013121 A1 | 09-03-2000 |

EPO FORM P0459

For more details about this annex : see Official Journal of the European Patent Office, No. 12/82

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 55254909 A
- US 75798610 A
- US 24643111 A
- US 24651711 A
- US 552549 A